# EUROPEAN PATENT APPLICATION

(11) **EP 3 865 202 A1**
(43) Date of publication of application: **18.08.2021**
(21) Application number: 20305134.7
(22) Date of filing: 13.02.2020
(51) Int. Cl.: B01D 53/73, F25J 1/00, C01B 32/55

(54) **USE OF CO2-CONTAINING GASEOUS EFFLUENT IN WET CONCRETE PREPARATION**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: JARRY, Luc, 78350 LES LOGES EN JOSAS (FR)
(74) Representative: Air Liquide

(57) **Abstract**

Use of a CO₂-containing gaseous effluent (10), whereby at least part of the CO₂ present in the effluent is captured as a mixture (25, 35) of CO₂ particles and liquid nitrogen (20) which is brought into contact with one or more ingredients (100, 101, 102, 121) of a wet concrete (125) before and/or during and/or after the preparation of the wet concrete (125), so that the mixture (25, 35) extracts heat from said one or more ingredients (100, 101, 102, 121) and CO₂ from the mixture (25, 35) partially carbonates Ca-compounds present in the wet concrete (125).

## Description

The present invention relates to the use of CO₂-containing gaseous effluents.

CO₂-containing gaseous effluents are generated by a large number or industrial processes, including, but not limited to, combustion processes.

Traditionally, such CO₂-containing gaseous effluents were released into the atmosphere.

In recent years, technologies have been proposed, which extract the CO₂ fraction of said gaseous effluents for sequestration or further use, in particular as a reactant in chemical synthesis processes. However, in both cases, extensive purification of the CO₂ fraction is required. Inter alia for this reason, most of the proposed technologies have proved not to be cost-effective, in particular in the case of small or medium-size industrial processes generating limited quantities of CO₂-containing gaseous effluents and/or gaseous effluents with low or variable CO₂ concentrations.

There is thus a need for alternative uses for the CO₂ fraction of gaseous effluents from industrial processes. In particular, there is a need for alternative uses for the CO₂ fraction of gaseous effluents from industrial processes generating CO₂-containing gaseous effluents on a limited scale.

Thereto, the present invention proposes a new method for the use of a gaseous effluent containing both a CO₂ gas fraction and optionally, but typically, also a non-CO₂ gas fraction. The method of the invention comprises a first step (step (a)), whereby, at a first location:
- liquid nitrogen at a temperature not greater than -196°C is provided, and
- the gaseous effluent is caused to contact said liquid nitrogen so that at least part of the CO₂ present in the CO₂ gas fraction of the effluent is captured as a mixture of solid CO₂ particles and liquid nitrogen, due to desublimation of said part of the CO₂ in the form of said solid particles.

Due to the fact that the temperature of the liquid nitrogen is well below the desublimation temperature of CO₂, the temperature of the captured CO₂ is equally below its desublimation temperature, i.e. the captured CO₂ is supercooled.

In step (b) of the process, the mixture obtained in step (a) is conveyed from the first location to a second location, where the mixture serves a useful purpose.

In accordance with the present invention, the mixture is put to use in the field of concrete. Indeed, during step (c), at the second location, the mixture is brought into contact with one or more ingredients of a wet concrete before and/or during and/or after the wet concrete is prepared by blending the ingredients of the wet concrete in a blender.

The contact of the mixture with the one or more ingredients of the wet concrete causes:
- the mixture to extract heat from the one or more ingredients of the wet concrete, and
- CO₂ from the mixture to partially carbonate Ca-compounds present in the wet concrete. The heat extracted by the mixture from the one or more ingredients provides the required thermal energy for bringing the liquid nitrogen to its evaporation temperature and for evaporating the liquid nitrogen, as well as for raising the temperature of the CO₂ to its desublimation temperature and for desublimating said CO₂. Thus, due to the additional cooling effect of the supercooled solid CO₂ particles in the mixture, it is possible to compensate, at least in part, for the heat of reaction generated by the partial carbonation. It is, in certain cases, even possible to provide a cooling which is more effective than if only liquid nitrogen were to be used as a cooling medium, without co-incidental partial carbonation.

The first location, where step (a) takes place, is typically at or near the site/plant where the CO₂-containing gaseous effluent is generated.

The second location, where step (c) takes place, may be close to or far away from the first location. For example, the second location may be a wet concrete production plant on or near the site (first location) where step (a) is performed. The second location may also be a wet concrete distribution plant or a construction site several kilometres away from the site (first location) where step (a) is performed.

One advantage of the method according to the invention is that, in step (b) the captured CO₂ is conveyed in a liquid, i.e. in the liquid nitrogen, rather than in gaseous form.The conveyance of the mixture from the first to the second location may, at least in part, take place through pipes. Conveyance through pipes is of particular interest when the mixture is to be conveyed over small or medium distances, for example within a plant or to a neighbouring plant on the same industrial site.

The conveyance of the mixture from the first to the second location may also, at least in part, be performed by transporting the mixture in a movable cryogenic reservoir, for example by rail (tank wagon), by road (tank truck), over water (by boat), etc.

The invention is particularly useful when the first location (where the CO₂-containing gaseous effluent is available) and the second location (where the wet concrete is prepared, where the wet concrete is cast or on the travel path of the wet concrete between its preparation and its casting) are located at a significant distance from one another, in particular at a distance of at least 10 km, preferably of at least 20 km.

With respect to step (c), it will be appreciated that, when the contact between the mixture and the 'one or more ingredients of the wet concrete' takes place after the preparation of wet concrete by blending, the mixture is in fact brought into contact with the wet concrete thus prepared, and thus with all of the ingredients of the wet concrete. The same is true when the contact between the mixture and the 'one or more ingredients of the wet concrete' takes place at the end of the blending process in which the wet concrete is prepared. In these cases, the heat is obviously extracted from the wet concrete as such.

Wet concrete is a paste comprising cement and water, referred to as "process water". Wet concrete typically includes further solid ingredients such as fine aggregate, in particular sand, and coarse aggregate, in particular gravel or crushed stone. The wet concrete paste optionally also contains additional additives to adjust the properties of the wet concrete before and/or during setting or of the set concrete obtained thereby.

The hydration of the cement, more specifically the reaction of Ca-compounds of the cement with water, causes the paste to harden or set and gain strength until a rock-like mass is formed, commonly referred to as set or hardened concrete or, in short, concrete, in contrast with "wet concrete" which is not hardened or only partially hardened.

The hydration reaction is exothermic and causes the temperature of the wet concrete to rise. Other reasons for the heating up of the wet concrete are: friction during blending, during mixing and during transport and high ambient temperatures and/or heat radiation.

Heating up of the wet concrete may cause slump loss, cracks in the set concrete, in particular plastic shrinkage cracks and/or thermal stress cracks, delayed ettringite formation and/or reduced workability of the wet concrete.

In order to avoid or to reduce said disadvantages, it is known in the art to cool the wet concrete, so that the temperatures at which the wet concrete is cast and/or sets are maintained within predetermined temperature ranges. Said predetermined temperature ranges may vary in function of the type of concrete and/or the type or size of construction for which the wet concrete is cast.

One known method of cooling the wet concrete is via the process water, which is added to the blender. The process water may, for example, be chilled before it is added to the blender, part of the process water may be added as ice in addition to and separately from liquid process water, or the process water may be added as a sludge of ice in liquid water.

Another known cooling method relies on the injection of a cryogenic liquid, in particular liquid nitrogen, as a cooling agent into a mixer in which the wet concrete is being mixed.

Liquid nitrogen is inert with respect to the wet concrete and only produces a cooling effect. The mixture used in accordance with the present invention contains solid CO₂ in addition to liquid nitrogen.

As indicated above, the CO₂ in the mixture causes partial carbonation of the wet concrete, so that at least part of the CO₂ of the mixture is captured inside the final set concrete and not released into the atmosphere. In addition, as will be discussed in more detail hereafter, partial carbonation also improves certain properties of the wet or set concrete.

At the same time, the mixture extracts thermal energy from the one or more ingredients of the wet concrete.

By thus using, in accordance with the invention, a mixture of solid CO₂ and liquid nitrogen, it is possible with a single intervention to achieve effective heat extraction together with beneficial partial carbonation. At the same time, detrimental excessive carbonation is avoided. Such excessive carbonation could arise if solid CO₂ were to be used on its own both for carbonation and cooling, due to the amount of CO₂ that would then be required for effective cooling.

According to one preferred embodiment, the mixture is brought into contact with one or more solid ingredients of the wet concrete before the blending step and preferably before process water is added to said one or more solid ingredients. In particular, the mixture may be brought into contact with one or more solid ingredients of the wet concrete inside the blender.

The mixture may also be brought into contact with one or more ingredients of the wet concrete during blending in the blender.

It is also possible to bring the mixture into contact with the wet concrete in the blender at the end of or after the blending of the ingredients therein, while preferably continuing to agitate the formed wet concrete in the blender.

The mixture may also be brought into contact with the wet concrete after the wet concrete has been removed from the blender, for example during subsequent mixing of the wet concrete in a mixer to which the wet concrete prepared in the blender has been transferred. Indeed, cooling and partial carbonation may also usefully be performed at a later stage, i.e. after the wet concrete has been prepared.

In practice, it was found that the mixture of supercooled solid CO₂ particles and liquid nitrogen demonstrated improved miscibility with the wet concrete compared with liquid nitrogen as such. As a consequence of this improved miscibility, a more even temperature profile in the wet concrete can be achieved, resulting in reduced long-term thermal damage to the material of the device holding the wet concrete (which may be the blender, a mixer, etc.) and to any temperature-suppression paint with which the device may be covered.

It is an advantage of the method according to the invention that it is suitable for gaseous effluents with a wide range of CO₂ contents and even for gaseous effluents with variable CO₂ contents. Even though the invention is particularly efficient when the gaseous effluent has a high CO₂ content, it is a particular advantage of the invention that it is also effective for capturing CO₂ from gaseous effluents with low and even very low CO₂ contents.

According to an embodiment of the invention, the CO₂ gas fraction typically constitutes from 7 to 100%vol, preferably from 10 to 90%vol and more preferably from 25 to 60%vol of the gaseous effluent.

The extent to which CO₂ from the gaseous effluent is captured in the mixture depends, inter alia on the intensity and the duration of the contact between the gaseous effluent and the liquid nitrogen. The intensity of the contact between the gaseous effluent and the liquid nitrogen may be increased by increasing the contact surface between the gaseous effluent and the liquid nitrogen.

The present invention may in particular be used to capture from 25%vol to 100%vol, preferably at least 40%vol, more preferably from 50 to 90%vol of the CO₂ gas fraction of the gaseous effluent.

Suitable methods for desublimating a component such as CO₂ from a gas in a liquid are described in US-A-2018/0238619, US-A-2018/0252469, US-B-10293297 and WO-A-2018/136628. However, according to these known processes, after the component has thus been desublimated/solidified, the component is again removed from the mixture and the liquid from which the component has been removed is recycled and reused for the desublimation of new component from the gas. These processes thus require additional equipment (i) for separating the desublimated component from the mixture, (ii) for the cooling, purification and returning of the liquid nitrogen to be recycled after the desublimated component has been removed therefrom and (iii) for the separate conditioning of the component after it has been removed from the mixture.

Depending on the process by which the gaseous effluent is generated, the gaseous effluent may contain humidity, i.e. water vapour, to a greater or smaller extent.

In that case, in accordance with the present invention, the gaseous effluent may be subjected to a dehumidification step before the gaseous effluent is brought into contact with the liquid nitrogen to form the mixture of solid CO₂ particles and liquid nitrogen.

However, as water is an essential ingredient of wet concrete, such a dehumidification step is not strictly necessary or, if performed, may be used to only partially dehumidify the gaseous effluent.

When the non-CO₂ gas fraction of the gaseous effluent which is brought into contact with the liquid nitrogen contains H₂O, at least part of the H₂O present in the non-CO₂ gas fraction of the gaseous effluent is captured as solid H₂O particles (ice particles) in the mixture. When, at the second location, the mixture is brought into contact with one or more ingredients of the wet concrete, the solid H₂O particles melt and the liquid H₂O is incorporated into the wet concrete. When the H₂O content of the mixture is significant, it may thus be preferable to adjust the amount of process water which is in addition used for the preparation of the wet concrete in the blender.

Similarly, depending on the process by which the gaseous effluent is generated, the gaseous effluent may contain entrained particulate matter, in greater or smaller concentration.

The gaseous effluent may be subjected to a dust-removal step for the complete or partial removal of particulate matter from the gaseous effluent before it is brought into contact with the liquid nitrogen.

However, as a rule, for most types of concrete and most types of particulate matter, the presence of such particulate matter is not a problem and the incorporation of particulate matter in concrete has been proposed as a manner of disposing of certain types of particulate waste. According to the present invention, when the gaseous effluent contains solid particulate matter, at least part of said particulate matter may be captured in the mixture when the gaseous effluent is brought into contact with the liquid nitrogen. Thereafter, when, at the second location, the mixture is brought into contact with the one or more ingredients of the wet concrete, the captured solid particulate matter is incorporated in the wet concrete and, after setting, in the set concrete.

The method according to the present invention can thus advantageously be used for the removal of certain solid, liquid or volatile pollutants from CO₂-containing gaseous effluents and for the disposal of same by their incorporation in concrete. In that case, these pollutants present in the CO₂-containing gaseous effluent are captured in the liquid nitrogen during step (a) and are incorporated in the wet concrete in step (c), after which said pollutants remain in the concrete during setting rather than being disseminated into the environment. An example of such a use is the capture of OCs (organic compounds) from gaseous effluents by means of cryocondensation in the liquid nitrogen. Other pollutants which may thus be captured are heavy-metal particles in the gaseous effluent. Such uses of the method according to the invention are naturally limited to concrete compositions which are chemically compatible with the captured pollutants and to uses of the final set concrete products for which the presence of said pollutants in the concrete is unproblematic.

The temperature at which the CO₂-containing gaseous effluent is obtained depends on the process by which it is generated. Certain such gaseous effluents are obtained at sub-zero temperatures, others at moderate temperatures close to ambient temperatures (e.g. 0 to 100°C), whereas others, such as the effluents of certain furnaces at much higher temperatures (e.g. 450 to 1600°C).

During the contact between the gaseous effluent and the liquid nitrogen, thermal energy is transferred from the gaseous effluent to the liquid nitrogen phase, causing the liquid nitrogen to warm up and/or part of the liquid nitrogen to evaporate.

To attenuate this effect, in particular when the gaseous effluent is obtained at higher temperatures, the gaseous effluent may be subjected to a cooling step before it is brought into contact with the liquid nitrogen.

In practice, such a cooling step is frequently an additional benefit as it enables thermal energy to be recovered from the gaseous effluent during said cooling step. Said recovered thermal energy may thereafter be exploited, for example as a heat source in a heating process, as an energy source for the production of mechanical energy or as an energy source for the production or electrical energy. The recovered thermal energy may in particular advantageously be put to use in the process which generates the CO₂-containing gaseous effluent.

The method according to the invention is thus entirely compatible with known technologies whereby combustion of fuel with an oxidant is used to heat an installation, whereby hot CO₂-containing combustion gases (gaseous effluent) are evacuated from the installation and whereby the energy efficiency of the installation is improved in that thermal energy is recovered from the evacuated combustion gases and reintroduced into the installation, in particular in that the recovered thermal energy is used to heat the fuel, the oxidant and/or a charge before it is introduced into the installation.

Not only is the method compatible with such an energy-recovery process, the use of such an energy-recovery method in the context of the method of the present invention, improves energy efficiency by heat recovery and improved efficiency CO₂ capture during step (a) of the method of the invention.

It is also possible to provide additional cooling of the liquid nitrogen and/or of the mixture in order to prevent a temperature increase and/or partial evaporation of the liquid nitrogen. When partial evaporation of the liquid nitrogen occurs, it is possible to recondense the evaporated liquid nitrogen, and possibly recycle same.

However, if possible, it is generally preferable to use the evaporated nitrogen on site, for example as a stirring gas, as a degassing gas or as an inerting medium, preferably at or near the first location.

When the gaseous effluent contains a N₂ fraction, the evaporated nitrogen is normally enriched with N₂ from the gaseous effluent. Depending on the composition of the gaseous effluent, the evaporated nitrogen may be substantially pure nitrogen or may also contain a non-N₂ gaseous residue of the gaseous effluent, i.e. a non-N₂ fraction of the gaseous effluent which neither condensed nor desublimated in the liquid nitrogen.

In step (a), the gaseous effluent is in practice typically caused to contact the liquid nitrogen until a mixture is obtained with a CO₂-particle content which is equal to or greater than a predetermined minimum CO₂-particle content (expressed, for example, in g CO₂ particles per litre), i.e. the desublimation of the CO₂ from the gaseous effluent is continued at least until such a CO₂-particle content is reached in the mixture.

Thereafter, the CO₂-particle content of the at least part of the mixture which is conveyed to the second location in step (b) may be adjusted before said at least part of the mixture is brought into contact with the one or more ingredients of the wet concrete in step (c). This adjustment of the CO₂-particle content may be performed at the first location after step (a), at some point during the conveyance of the mixture in step (b) or at the second location before step (c). The CO₂-particle content of the mixture which is effectively brought into contact with the one or more ingredients of the wet concrete in step (c) may thus, for example, be adjusted in order to ensure a constant CO₂-particle content of the mixture or to adapt the CO₂-particle content of the mixture to specific requirements, which may, for example, be imposed by the nature (composition) or the subsequent use of the wet concrete(casting and/or curing conditions, type of set concrete product, etc.).

Suitable methods for adjusting the CO₂-particle content include,
(i) increasing the CO₂-particle content by the addition to the mixture of additional solid-CO₂-particles as such;
(ii) increasing or decreasing the CO₂-particle content by the addition to the mixture of additional solid CO₂ particles in the form of CO₂-particle-containing liquid nitrogen with a CO₂-particle content different from (higher, respectively lower than) the CO₂-particle content of the mixture (for example by combining mixtures of different CO₂-particle content obtained at different first locations during step (a));
(iii) decreasing the CO₂-particle content of the mixture by addition of liquid nitrogen to the mixture;
(iv) increasing the CO₂-particle content of the mixture by the removal of liquid nitrogen from the mixture, or
(v) a combination of several of these steps, for example, a combination of steps (i) and (ii) or (i) and (iv) or a combination of steps (ii) and (iii).

If necessary, the solid CO₂ particles may be suspended in the mixture before the mixture is brought into contact with the one or more ingredients of the wet concrete in step (c). This may, for example, be achieved by agitation and/or by the addition of a suspending agent, whereby, naturally, a suspending agent is selected which is compatible with the composition of the wet concrete and its subsequent use. A, substantially uniform, suspension of the CO₂ particles in the mixture facilitates the control of the quantities of both liquid nitrogen and of solid CO₂ particles with which the one or more ingredients of the wet concrete is contacted, for example by a mere volumetric control of the mixture brought into contact with said one or more ingredients.

In accordance with the present invention, the mixture is brought into contact with one or more ingredients of a wet concrete before and/or during and/or after the preparation of the wet concrete in a blender.

In order to optimize the contact between the mixture and the one or more ingredients of the wet concrete, thereby providing better and more distributed cooling and partial carbonation, it is preferable for the mixture to be brought into contact with the one or more ingredients of the wet concrete during agitation in a mixer of the one or more ingredients or the wet concrete as such, as the case may be.

According to one preferred embodiment, said mixer is the blender in which the wet concrete is prepared. Examples of suitable blenders are single-shaft mixers, twin-shaft mixers and rotating-drum mixers. Such a rotating-drum mixer may be stationary or mobile, for example mounted on a mixer truck. In the case of a mobile rotating-drum blender/mixer, the blender/mixer in which the wet concrete is prepared may also be used for conveying/transporting the wet concrete during step (b).

According to another preferred embodiment, the mixture of CO₂ particles and liquid nitrogen is brought into contact with the already prepared wet concrete in a mixer other than the blender, i.e. in a mixer to which the wet concrete was transferred after its preparation in the blender. In this case too, the mixer may be a stationary mixer, such as a rotary drum mixer, located for example at a construction site where the concrete is to be cast or in a plant in which prefabricated concrete construction elements are produced. The mixer may also be a mobile mixer in which the wet concrete may be transported, for example a rotating drum mixer of a concrete transport truck, with which the wet concrete may be conveyed/transported during step (b).

The second location, where the mixture is brought into contact with the one or more ingredients of the wet concrete during step (c), may be any suitable location.

As already mentioned, the second location may be the site where the wet concrete is prepared in the blender. Alternatively, the second location may be the site where the wet concrete is cast. This is typically a construction site, but it may also be a plant for the production of concrete parts, such as prefabricated concrete construction elements. The second location may also be a site where already prepared wet concrete is poured into a mixer, for example into the rotating drum of a mixer truck. The second location may be an intermediate location between the location where the wet concrete is prepared and the location where the wet concrete is cast, typically at an intermediate stage of the transport route of the wet concrete during step (b).

It is also possible to combine several such second locations, i.e. to bring one or more ingredients of the wet concrete in contact with the mixture in succession at multiple locations.

The method according to the invention is suitable for the treatment of a wide range of CO₂-containing effluents of different origins, including effluents with a significant N₂ and/or H₂O content as well as effluents laden with dust and/or other pollutants.

According to a specific embodiment, the gaseous effluent comprises or consists of combustion gases.

Particularly interesting gaseous effluents are those generated in a cement production plant, such as the off-gases of a rotary cement kiln.

With the method according to the invention, it is possible to perform step (a), i.e. the provision of liquid nitrogen, the contact between the gaseous effluent and the liquid nitrogen and the capture of CO₂ as a mixture of solid CO₂ particles and liquid nitrogen, at multiple first locations, for example at various sites where CO₂-containing gaseous effluents are generated.

The mixtures obtained at said multiple first locations are then typically conveyed to a third location, where said mixtures are combined into a single mixture of CO₂ particles and liquid nitrogen. Said third location may correspond to one of the multiple first locations, for example the first location with the largest production CO₂-containing gaseous effluent or the first location with ready access to liquid nitrogen, for example near a liquid nitrogen pipeline or an air separation unit. Typically, the different mixtures are combined at the third location so that the resulting single mixture has a predetermined desired CO₂-particle content. Additional steps, as discussed earlier, may also be used to adjust the CO₂-particle content if necessary. For example, further liquid nitrogen may be added to lower the CO₂-particle content of the resulting single mixture. Other ingredients, such as a suspending agent, may also be added at this stage. The resulting mixture is then further conveyed from the third location to the second location and used as previously described.

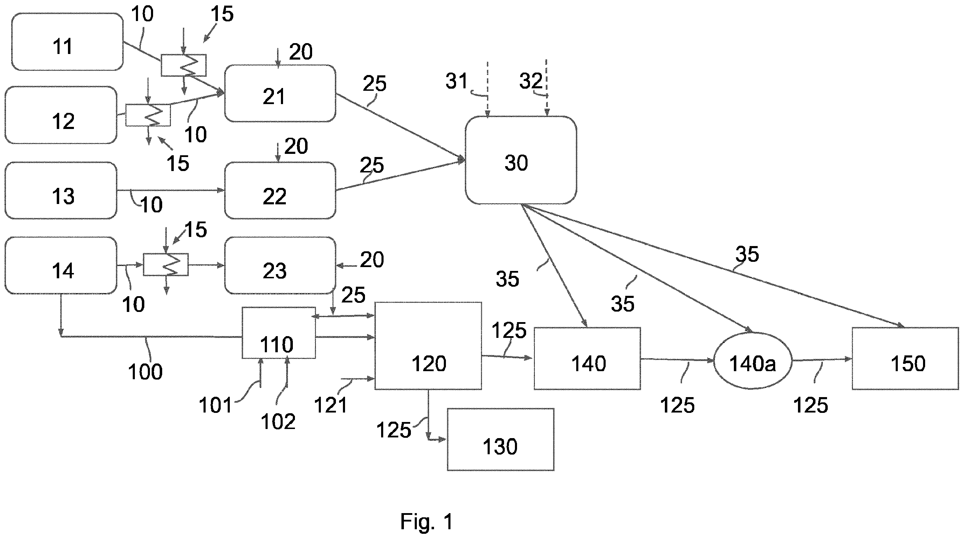

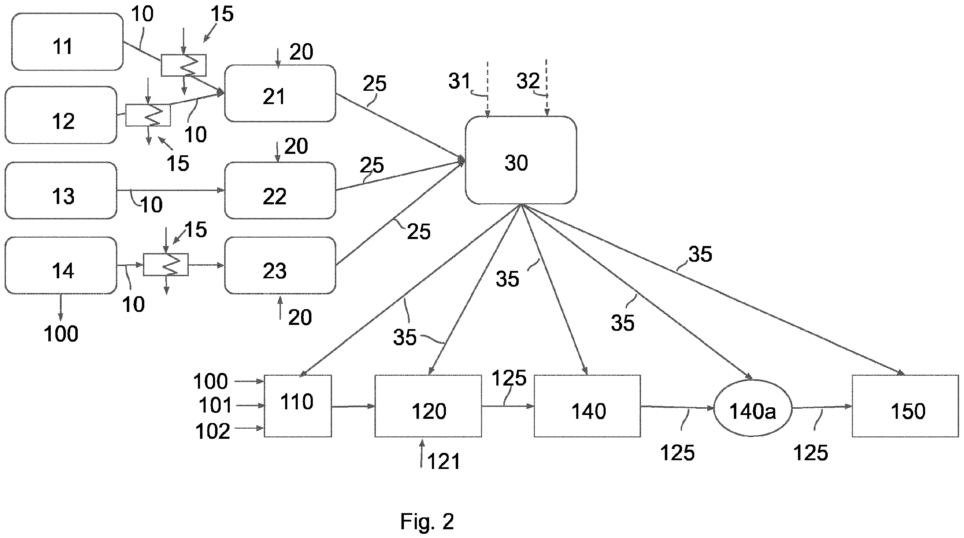

The present invention and its advantages will be better understood in the light of the following example, reference being made to figures 1 and 2, which are schematic representations of two embodiments of the method in accordance with the invention, whereby identical reference numbers refer to the same or similar features in the two figures.

CO₂-containing gaseous effluent 10 is generated in a range of processes 11, 12, 13, 14, whereby 11 and 12 are, for example, two non-ferrous metal melting furnaces, 13 is a boiler, an anaerobic digestion plant for biomass production or a chemical process producing a CO₂-containing gaseous effluent and 14 is a cement production plant.

In installations 21, 22 and 23 (corresponding to three distinct first locations), the CO₂-containing gaseous effluents 10 of the different processes 11, 12, 13 and 14 are brought into contact with cryogenic liquid nitrogen 20 in such a way that at least part of the CO₂ present in said gaseous effluents desublimates and that a mixture 25 of supercooled CO₂ particles and liquid nitrogen is obtained. For this purpose, any of the desublimation processes mentioned earlier may be used.

As gaseous effluent 10 of process 13 is obtained at substantially ambient temperatures, it is treated directly in installation 22. The gaseous effluents 10 of processes 11, 12 and 14 being generated at significantly higher temperatures, they are first cooled in heat recovery systems 15 before being brought into contact with the liquid nitrogen 20. The heat recovered by heat recovery systems 15 is thereafter utilized for heating or for the generation of mechanical or electrical energy. Gaseous effluent 10 of cement production plant 14 is treated in installation 23, while the gaseous effluents 10 of processes 11 and 12 are treated together in a same installation 21, i.e. at a same first location.

When mixtures with at least a predetermined minimum solid CO₂ content are obtained in installations 21, 22 and 23 (whereby the minimum CO₂ content of the respective installations may be the same or different), at least part of the mixture 25 is removed from the corresponding installations 21, 22 and 23 and new liquid nitrogen 20 is added to the installation for the treatment of further amounts of CO₂-containing gaseous effluent 10.

Step (a) of the method according to the invention may thus be performed as a semi-batch process. Step (a) may also be performed as a batch process, whereby the totality of the obtained mixture is removed from the installation 21, 22 or 23 and replaced with a new batch of liquid nitrogen. Similarly, step (a) may also be performed as a continuous process, whereby part of the obtained mixture is continuously removed and replaced with new liquid nitrogen.

As shown in figure 1, the mixtures 25 of installations 21 and 22 are combined in reservoir 30 so that a mixture 35 of solid CO₂ particles and liquid nitrogen with a specific desired CO₂-particle content is obtained. The corresponding third location, where reservoir 30 is located, may be the location (first location) where one of the installations 21 and 22 is located, and to which at least part of the mixture obtained in the other of installations 21 and 22 is conveyed. Alternatively, reservoir 30 may be located at a third location which is different from the locations (first locations) where installations 21 and 22 are located, such as a central collection site to which the mixtures obtained from different first sites are collected. Further ingredients may also be added to the mixture in reservoir 30. If necessary, additional liquid nitrogen 31 may be added to reduce the CO₂-particle content. Furthermore, a suspending agent 32 may be added so as to obtain a suspension 35 with substantially even distribution of the CO₂ particles in the mixture. Thereto, reservoir 30 may be provided with an agitator or agitator system (not shown).

Cement 100 produced in cement production plant 14 is mixed with sand (fine granulate) 101 and gravel (coarse granulate) 102 in silo 100. Mixture 25 from installation 23 is conveyed to silo 102 by means of a cryogenic conduit and is then added to these solid ingredients, which are thereby cooled. When the temperature of the solid ingredients 100, 101, 102 has dropped to a sufficiently low value, the solid ingredients 100, 101, 102 are introduced, together with the added mixture 25 from installation 23, to blender 120 where process water 121 is further added and blending proceeds until wet concrete 125 is obtained. The temperature of said wet concrete 125 is kept low by means of mixture 25. In addition, the CO₂ content of said mixture 25 causes partial carbonation of the wet concrete in the blender 120.

To the extent that added mixture 25 contains H₂O ice crystals, the amount of process water 121 added may be adjusted.

Instead of or in combination with the cooling of one or more of the solid ingredients 100, 101 and 102 in silo 100 before process water 121 is added thereto, it is also possible to cool and partially carbonate the wet concrete during the blending of said ingredients in blender 120, i.e. during the preparation of the wet concrete itself.

Part of the wet concrete 125 produced in blender 120 is sent to a plant 130 in which concrete parts, such as prefabricated concrete construction elements, are produced.

Mixture 35 from reservoir 30 is divided over a number of transportable cryogenic reservoirs (not shown).

Part of the wet concrete 125 produced in blender 120 is introduced in the rotating drum of a concrete transport truck 140. Friction caused by the rotation of said drum and/or convective and radiative ambient heat, causes the wet concrete in the rotating drum to heat up. However, one of the transportable cryogenic reservoirs is available at the site where the wet concrete 125 is loaded on truck 140. In order to keep the wet concrete 125 in the truck 140 cool, and cause partial carbonation of said wet concrete 125, a controlled amount of mixture 35 can be injected into the rotating drum in contact with the wet concrete 125.

Truck 140 is then used to transport the wet concrete 125 to the construction site 150, where it will be cast. When the distance over which the wet concrete 125 is to be transported is such that the temperature of the wet concrete 125 may rise unacceptably en route, further mixture 35, supplied in a second cryogenic reservoir, may be injected in the rotary drum of truck 140 in contact with the wet concrete 125 at an intermediate location 140a between the site where the wet concrete 125 was loaded on truck 140 before travelling on towards construction site 150 and construction site 150 itself.

As the setting of the wet concrete is an exothermal reaction and the temperature of the setting concrete must be kept within limits to prevent faults in the set concrete, cooling in combination with partial carbonation, may be useful immediately before the wet concrete 125 is cast. Thereto, a cryogenic reservoir with mixture 35 is available on construction site 150. Before the concrete is cast, the wet concrete 125 can be put into contact with mixture 35, whereby the wet concrete 125 is cooled and partially carbonated at construction site 150 before the wet concrete 125 is cast.

In the embodiment illustrated in figure 2, blender 120 is located at a distance from cement production plant 14 and the cement 100 produced in plant 14 is transported from cement plant 14 to blender 110, for example in cement bags which shield the cement against humidity during storage and transport, or in bulk, for example, in tank trucks, train carriages or ships. In addition, the mixture 25 of solid CO₂ particles and liquid nitrogen from installation 23 at cement plant 14 is conveyed to reservoir 30, where it is combined with the mixtures 25 from the other installations 21 and 22 in order to obtain mixture 35 with the specific desired CO₂-particle content. From reservoir 30, the required quantities of mixture 35 are transported in moveable cryogenic reservoirs, for example cryogenic tank trucks or rail carriages, to the one or more locations and equipments where mixture 35 is to be brought into contact with one or more ingredients of the wet concrete, as the case may be, the wet concrete itself. Possible such installations/locations are: silo 110, in which the dry ingredients 100, 101 and 102 are combined, blender 120, in which the wet concrete is prepared in that process water is added 121 is added to and blended with the dry ingredients 100, 101 and 102 to produce wet concrete 125, concrete transport truck 140 at the location where the rotating drum of truck 140 is filled with wet concrete 125 from blender 120, at the construction site 150, where the wet concrete 125 will be cast, and concrete transport truck 140 at an intermediate location 140a between the filling of the truck and its arrival at the construction site 150.

When, in the different steps described above, partial carbonation of the wet concrete takes place, CO₂ becomes chemically bound to Ca-elements in the wet concrete and ends up effectively sequestered in the final set concrete element.

In the above examples, different possibilities for bringing the wet concrete or ingredients thereof in contact with the mixture of solid CO₂ particles and liquid nitrogen have been described. It will be appreciated that, generally speaking, not all of these steps will be required to achieve the required cooling and partial carbonation of the wet concrete. Only one or only a limited number of such steps may in practice be required, depending on the circumstances. Said circumstances including environmental temperatures and heat radiation, the travel time of the wet concrete and the size of the concrete elements to be cast. When during the process chain from the preparation of the wet concrete to the casting of the wet concrete, one or more ingredients of the wet concrete 125 are brought into contact with the mixture 25, 35 at multiple occasions, care is taken to ensure that suitable levels of cooling and partial carbonation are achieved. For example, in the case of a single contact between the mixture and one or more ingredients of the wet concrete 125, a mixture with a higherCO₂-particle content may be used compared to when one or more ingredients of the wet concrete 125 are repeatedly brought into contact with the mixture 25, 35, thereby avoiding excessive carbonation, while still ensuring adequate cooling.

It is also possible to combine the method according to the invention with further treatments of the wet concrete, for example with additional cooling steps by means other than contact with a mixture of solid a mixture of CO₂ particles and liquid nitrogen.

## Claims

1. Method for the use of a gaseous effluent (10) containing a CO₂ gas fraction and optionally a non-CO₂ gas fraction, the method comprising the steps of:
(a) at a first location:
• providing liquid nitrogen (20) at a temperature not greater than -196°C,
• causing the gaseous effluent (10) to contact the liquid nitrogen (20) so as to as to capture at least part of the CO₂ present in the CO₂ gas fraction as a mixture (25, 35) of CO₂ particles and liquid nitrogen (20),
(b) conveying at least part of the mixture (25, 35) to a second location, and
(c) at the second location, bringing the mixture (25, 35) into contact with one or more ingredients (100, 101, 102, 121) of a wet concrete (125) before and/or during and/or after the wet concrete (125) is prepared by blending the ingredients (100, 101, 102, 121) of the wet concrete (125) in a blender (120), so that
• the mixture (25, 35) extracts heat from said one or more ingredients (100, 101, 102, 121) of the wet concrete (125), and
• CO₂ from the mixture (25, 35) partially carbonates Ca-compounds present in the wet concrete (125).

2. Method according to claim 1, whereby, at the second location, the mixture (25, 35) is brought into contact with the wet concrete (125) after the blending step, preferably during agitation of the wet concrete (125).

3. Method according to claim 1 or 2, whereby the mixture (25, 35) is brought into contact with the wet concrete (125) during agitation of the wet concrete (125) in the blender (120) or in a mixer to which the wet concrete (125) prepared in the blender (120) is transferred.

4. Method according to any one of the preceding claims, whereby the CO₂ gas fraction constitutes from 7 to 100%vol, preferably from 10 to 90%vol and more preferably from 25 to 60%vol of the gaseous effluent (10).

5. Method according to any one of the preceding claims, whereby the gaseous effluent (10) is subjected to a cooling step before it contacts the liquid nitrogen (20).

6. Method according to claim 5, whereby thermal energy is recovered from the gaseous effluent (10) during the cooling step and whereby at least part of said recovered thermal energy is used as a heat source in a heating process, as an energy source for the production of mechanical energy or as an energy source for the production or electrical energy.

7. Method according to any one of the preceding claims, whereby the gaseous effluent (10) is caused to contact the liquid nitrogen (20) until the mixture (25, 35) presents a CO₂-particle content which is equal to or greater than a predetermined minimum CO₂-particle content.

8. Method according to any one of the preceding claims, whereby the CO₂-particle content of the at least part of the mixture (25, 35) is adjusted before said at least part of the mixture (25, 35) is brought into contact with the wet concrete (125).

9. Method according to any one of the preceding claims, whereby the conveying of the mixture (25, 35) includes transport of the mixture (25, 35) in a mobile cryogenic reservoir.

10. Method according to any one of the preceding claims, whereby the mixture (25, 35) is brought into contact with the one or more ingredients (100, 101, 102, 121) of the wet concrete (125) in a mixer, preferably in the blender (120) in which the wet concrete (125) is prepared and/or in a mixer to which the wet concrete (125) prepared in the blender (120) is transferred.

11. Method according to claim 10, whereby the mixer is a rotating drum mixer of a concrete mixer truck (140).

12. Method according to any one of the preceding claims, whereby the second location is situated:
• a site where the wet concrete (125) is prepared in the blender (120),
• at a site where the wet concrete (125) is cast, preferably a construction site,
• a site where the prepared wet concrete (125) is introduced into a mixer, preferably the rotating drum mixer of a truck (140) and/or
• at an intermediate site between a site where the wet concrete (125) is prepared and a site where the wet concrete (125) is cast.

13. Method according to any one of the preceding claims, whereby the gaseous effluent (10) comprises or consists of combustion gases.

14. Method according to any one of the preceding claims, whereby part of the liquid nitrogen (20) evaporates during step (a) and whereby the evaporated nitrogen is utilized at the first location.

15. Method according to any one of the preceding claims, whereby:
• step (a) is performed at multiple first locations,
• the mixtures (25) obtained at said multiple first locations are conveyed to a third location where said mixtures (25) are combined to form a final mixture (35) of solid- CO₂-particles and liquid nitrogen,
• the final mixture (35) is transported to a mixer in which wet concrete (125) is mixed, and
• the final mixture (35) is introduced into the mixer and brought into contact with the wet concrete (125) in the mixer, thereby causing the wet concrete (125) to be cooled and partially carbonated.
